(19) Europäisches Patentamt
European Patent Office
Office européen des brevets

(11) EP 0 538 480 B1

(12) **EUROPEAN PATENT SPECIFICATION**

(45) Date of publication and mention
of the grant of the patent:
**06.08.1997 Bulletin 1997/32**

(21) Application number: **92908497.8**

(22) Date of filing: **09.04.1992**

(51) Int Cl.6: **D04H 3/03**, D04H 3/16

(86) International application number:
**PCT/JP92/00448**

(87) International publication number:
**WO 92/18678 (29.10.1992 Gazette 1992/27)**

(54) **FILAMENT DISPERSING DEVICE**

DRAHTDISPERGIERUNGSVORRICHTUNG

DISPOSITIF DE DISPERSION DE FILAMENTS

(84) Designated Contracting States:
**DE FR GB IT SE**

(30) Priority: **09.04.1991 JP 76536/91**

(43) Date of publication of application:
**28.04.1993 Bulletin 1993/17**

(73) Proprietor: **MITSUI PETROCHEMICAL INDUSTRIES, LTD.**
**Tokyo 100 (JP)**

(72) Inventors:
• **ISHII, Hiroshi**
**Kuga-gun Yamaguchi-ken 740 (JP)**
• **HATA, Katsuya**
**Mitsui Petrochemical Industries, Ltd**
**Chiyoda-ku Tokyo 100 (JP)**

• **KOBAYASHI, Yoshinori**
**Mitsui Petrochemical Ind. Ltd**
**Kuga-gun Yamaguchi-ken 740 (JP)**

(74) Representative: **Senior, Alan Murray**
**J.A. KEMP & CO.,**
**14 South Square,**
**Gray's Inn**
**London WC1R 5LX (GB)**

(56) References cited:
• **DE-A- 2 163 795**
• **JP-A-60 231 856**
• **JP-B-48 002 907**
• **JP-B-49 000 430**
• **JP-B-63 038 461**
• **US-A- 3 334 161**
• **US-A- 3 766 606**

**Description**

Technical Field

The present invention relates to a filaments dispersing device for the production of a nonwoven fabric, for flatly dispersing filaments carried by an air flow.

Background Art

In a known producing method for a nonwoven fabric, numerous filaments ejected from a spinning nozzle are drawn by an air gun and are stretched. Then, the filaments are carried by an air flow into a guide tube, and are dispersed in a dispersing device (usually formed as a dispersing nozzle or a dispersing pipe). Then, the filaments are collected on a moving collector surface to thereby form a web.

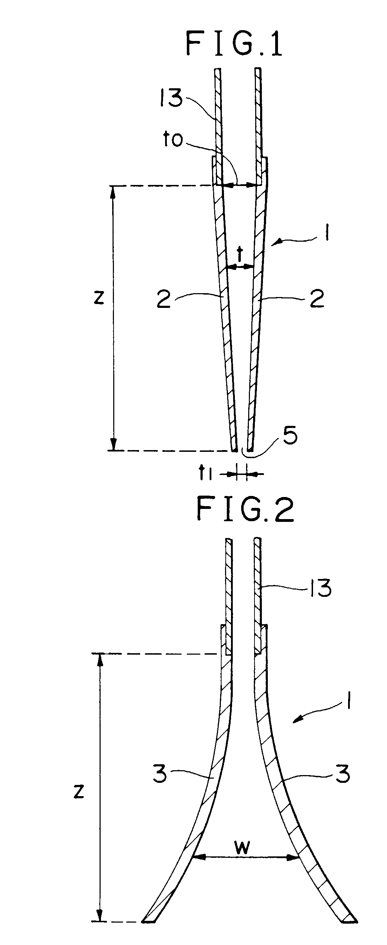

In Japanese Patent Publication No. 47-24991, there is described a device for dispersing and depositing filaments to produce a fleece (a kind of web). As a dispersing portion of this device, there are shown in the above reference an example wherein a space w between opposed side plates (corresponding to side walls) of a dispersing pipe and a space t between opposed dispersing plates (facing parts of the dispersing pipe other than the opposed side plates) are linearly changed (Fig. 1 in the above reference); an example wherein the space w between the opposed side plates is increased toward an outlet (filaments outlet) of the dispersing pipe in such a manner that a radius of curvature of the opposed side plates is gradually decreased toward the outlet (Fig. 2(a) in the above reference); and an example wherein the space w between the opposed side plates is linearly increased along tangential lines of arcs and the arcs are connected with expanded ends of the tangential lines (Fig. 2(b) in the above reference).

However, in the dispersing device formed as the dispersing pipe as described in Japanese Patent Publication No. 47-24991, a change in sectional area of the device is large, or the space w between the opposed side plates is rapidly increased toward the filaments outlet. Accordingly, the air flow in the device separates from the opposed side plates and the opposed dispersing plates, causing remarkable turbulence of the air flow. As a result, the filaments carried by the air flow are largely disturbed to cause the generation of yarn bundles damaging the appearance of the web.

DE-A-2 163 795 discloses a method of making a nonwoven fabric wherein filaments from a take off nozzle having a circular cross-section are spread to form a veil and directed before lay down through at least one guide box which narrows wedge-like in the filament transport direction.

US-A-3 766 606 discloses a dispensing device comprising a pair of converging spaced plates adjustable with respect to each other.

Disclosure of the Invention

The present invention has been realized in view of the above circumstances, and it is an object of the present invention to provide a dispersing device which can disperse filaments uniformly and widely on a moving collector surface by suppressing the turbulence of an air flow as a carrier medium for the filaments to thereby reduce the disturbance of the filaments.

According to the present invention achieving the above object, there is provided a filaments dispersing device for the production of a nonwoven fabric, for dispersing filaments carried by an air flow and ejecting said filaments onto a moving collector surface, said filaments dispersing device being formed as a vertically extending dispersing pipe having an upper end formed with a filaments inlet and a lower end formed with a filaments outlet wherein the distance t between the pipe walls in a first direction in a vertical plane is decreased with an increase in distance z from said filaments inlet toward said filaments outlet and the distance w between the pipe walls in a second direction in a vertical plane perpendicular to said first direction is increased with the increase in said distance z, said distance w at said filaments outlet being greater than said distance t at said filaments outlet characterised in that a sectional area S of said dispersing pipe at an arbitrary portion thereof in a horizontal plane perpendicular to a line along said distance z is represented by an expression approximated to Expression 1 to be given below, and $dw/dz \geq 0$ and $d^2w/dz^2 \leq 0.3$ are satisfied for all values of said distance z.

$$\text{Expression 1:} \qquad S = a \times z + b$$

where a is a constant satisfying $-1.00 \leq a \leq 1.00$, and b is a sectional area of said filaments inlet.

$$\text{Preferably} \qquad d^2w/dz^2 \leq 0.006.$$

It is preferable that the space t between the dispersing plates is a monotone decreasing function of the distance z.

It is preferable that the space between the dispersing plates at the filaments outlet is 1 mm or more in consideration of operability.

It is preferable that a condition for carrying the filaments in the dispersing device having the above shape is such that an air velocity Va at the filaments outlet is represented by a ratio of Q/Send where Q represents a flow rate of the air flow and Send represents a sectional area of the filaments outlet, and that the air velocity Va is related with a filaments velocity Vf so as to satisfy

$$2Vf < Va < 4Vf.$$

There will now be described a preferred embodiment of the present invention with reference to the drawings.

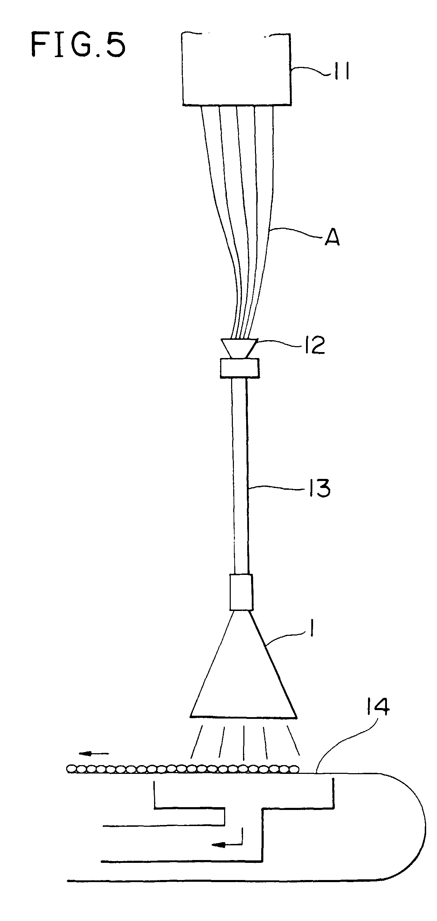

Referring to Fig. 5, there is shown a nonwoven fabric producing apparatus to which the present invention is applied. The nonwoven fabric producing apparatus includes a spinneret 11 as a spinning nozzle for filamentously extruding a molten resin, an air gun 12 provided below the spinneret 11 for receiving filaments A extruded from the spinneret 11, stretching the filaments A, and ejecting the same with a high-speed air flow, a guide tube 13 connected at an upper end thereof to the air gun 12 for carrying the filaments A with the air flow, and a moving collector surface 14 as an air permeable screen belt provided below the guide tube 13. Furthermore, a dispersing device 1 according to the present invention is provided at the level of about 100 to 600 mm above the moving collector surface 14 so that an upper end of the dispersing device 1 is directly connected to the guide tube 13.

The dispersing device 1 is constituted of a pair of flat dispersing plates 2 vertically straight extending so as to be opposed to each other as shown in Fig. 1 and a pair of side plates 3 connecting the dispersing plates 2 so as to be curved away from each other as shown in Fig. 2.

A distance z from a filaments inlet of the dispersing device 1 to a filaments outlet 5 thereof is set to about 20 to 400 mm. An outlet of the guide tube 13 is connected to the filaments inlet of the dispersing device 1 so that there is no step between an inner surface of the guide tube 13 and an inner surface of the dispersing device 1.

The guide tube 13 has an inner diameter of 6 to 20 mm, for example. About 200 filaments each having a size of 0.3 to 15 D (denier) are ejected with an air flow of 20 to 60 $Nm^3$/hr from the guide tube 13.

In correspondence with that the inner diameter of the guide tube 13 is set to 6 to 20 mm, an inner diameter $t_0$ of the filaments inlet of the dispersing device 1 connected to the guide tube 13 is also set to 6 to 20 mm.

A space t between the opposed dispersing plates 2 is gradually decreased with an increase in value of the distance z from the filaments inlet, and a space $t_1$ at the filaments outlet 5 is set to 0.7 to 3 mm, for example. On the other hand, a space w between the opposed side plates 3 is gradually increased with an increase in value of the distance z from the filaments inlet.

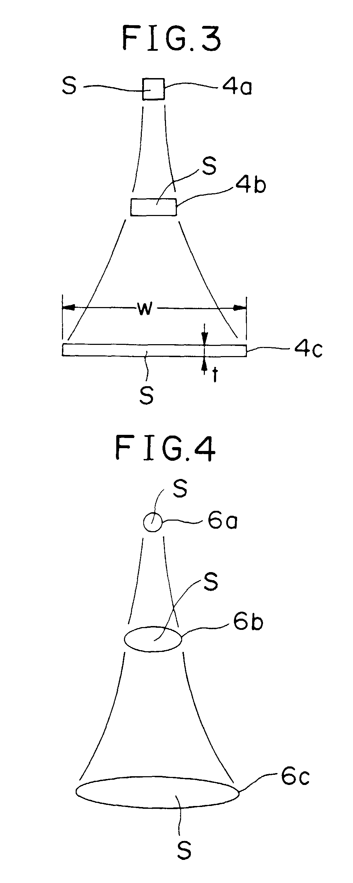

As shown in Fig. 3, a horizontal cross section of the dispersing device 1 consisting of the dispersing plates 2 and the side plates 3 in combination (i.e., a cross section perpendicular to a line along the distance z, and having a sectional area S) is shaped so that it is substantially square at an upper end portion 4a of the dispersing device 1 where the value of the distance z is short; it is substantially rectangular at an intermediate portion 4b of the dispersing device 1 where the value of the distance z is medium; and it is flatly rectangular at a lower end portion 4c as the filaments outlet 5 of the dispersing device 1 in such a manner that each short side corresponding to the space t is set to 0.7 to 3 mm, for example, and each long side corresponding to the space w is set to 20 to 100 mm, for example.

In the dispersing device 1 shown in Figs. 1 and 2, there is the following relation between the distance z and the space w. That is, an inclination of the dispersing plates 2, dw/dz is set to zero or positive, and a rate of increase thereof, $d^2w/dz^2$ is set to 0.3 or less. In particular, there is no step between the upper end of the device and the outlet 14 of the guide tube 13, so that the inclination, dw/dz at a connecting portion (z = 0) is zero.

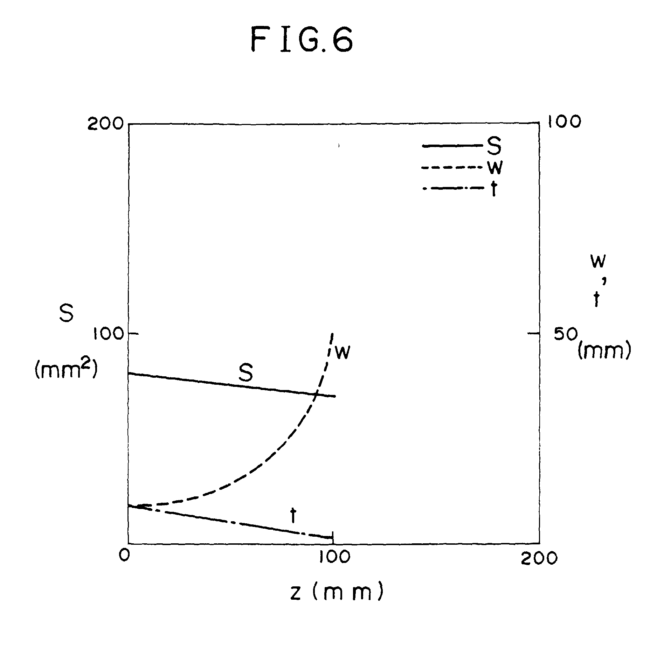

There is shown a relation among w, t, and S in Fig. 6. The relation is expressed as follows:

$$t = -0.076 \times z + 9.000$$

$$S = -0.11 \times z + 81.00$$

$$S = w \times t$$

The above expression of S and z is approximated to Expression 1 mentioned above.

The dispersing plates 2 and the side plates 3 are not limited to the flat plates as mentioned above, but they may be curved as viewed in horizontal cross section. For example, as shown in Fig. 4, the horizontal cross section of the dispersing device 1 consisting of the dispersing plates 2 and the side plates 3 in combination may be shaped so that it is substantially circular at an upper end portion 6a of the dispersing device 1; it is elliptical at an intermediate portion 6b of the dispersing device 1; and it is flatly elliptical at a lower end portion 6c as the filaments outlet 5 of the dispersing device 1 in such a manner that a major axis is much longer than a minor axis.

As a modification, the horizontal cross section may be so shaped as to combine the elliptical shape and the rectangular shape.

The filaments outlet 5 of the dispersing device 1 is located at the level of 100 to 600 mm from the screen belt 14. The filaments A carried through the guide tube 13 at high speeds are gathered in more convergent manner in opposed directions of the dispersing plates 2 and are spread in opposed directions of the side plates 3 along the curves of the side plates 3. Thus, the filaments A are uniformly dispersed in the dispersing device 1 and are then ejected from the filaments outlet 5.

In the nonwoven fabric producing apparatus as shown in Fig. 5 employing the filaments dispersing device as shown in Figs. 1 and 2, the filaments A can be dispersed in the range of 600 mm or more by varying the height from the screen belt 14 or the velocity of the air flow, for example.

Brief Description of the Drawings

Fig. 1 is a vertical sectional side view of a preferred embodiment of the dispersing device according to the present invention;

Fig. 2 is a vertical sectional elevational view of the dispersing device shown in Fig. 1;

Fig. 3 is a horizontal sectional view of the dispersing device shown in Fig. 2;

Fig. 4 is a horizontal sectional view of a modification of the dispersing device shown in Fig. 2;

Fig. 5 is a schematic view of a nonwoven fabric producing apparatus employing the dispersing device of the present invention;

Fig. 6 is a graph showing a relation among a distance z from a filaments inlet to a filament outlet of a dispersing device used in Example 1, a space w between side plates of the dispersing device, a space t between dispersing plates of the dispersing device, and a sectional area S of the dispersing device;

Fig. 7 is an illustration of air velocity distribution in the dispersing device used in Example 1;

Fig. 8 is a graph showing a relation among a distance z from a filaments inlet to a filament outlet of a dispersing device used in Comparison 1, a space w between side plates of the dispersing device, a space t between dispersing plates of the dispersing device, and a sectional area S of the dispersing device;

Fig. 9 is a vertical sectional view of the dispersing device used in Comparison 1;

Fig. 10 is an illustration of air velocity distribution in the dispersing device used in Comparison 1;

Fig. 11 is a graph showing a relation among a distance z from a filaments inlet to a filament outlet of a dispersing device used in Comparison 2, a space w between side plates of the dispersing device, a space t between dispersing plates of the dispersing device, and a sectional area S of the dispersing device;

Fig. 12 is a graph showing a relation among a distance z from a filaments inlet to a filament outlet of a dispersing device used in Comparison 3, a space w between side plates of the dispersing device, a space t between dispersing plates of the dispersing device, and a sectional area S of the dispersing device;

Fig. 13 is a graph showing a relation among a distance z from a filaments inlet to a filament outlet of a dispersing device used in Comparison 4, a space w between side plates of the dispersing device, a space t between dispersing plates of the dispersing device, and a sectional area S of the dispersing device; and

Fig. 14 is an illustration of air velocity distribution in the dispersing device used in Comparison 4.

Best Mode for Carrying Out the Invention

An example of the present invention will now be described.

As shown in Fig. 5, the dispersing device (dispersing pipe) 1 of various shapes was connected to the guide tube 13 having an inner diameter of 10 mm. With an air flow of 42 $Nm^3$/hr, 100 polypropylene filaments A each having a size of 2 denier was carried at a velocity of Vf = 3000 m/min. The screen belt 14 as the moving collector surface having a suction device was located below the filaments outlet of the dispersing device 1 by 150 mm. The filaments A ejected from the dispersing device 1 were collected on the screen belt 14 to obtain a web. The dispersing device 1 was disposed so that the dispersing plates were perpendicular to a moving direction of the moving collector surface 14. A dispersion width of the filaments A, an air velocity distribution from the filaments outlet, and an appearance of the web were evaluated.

(Example 1)

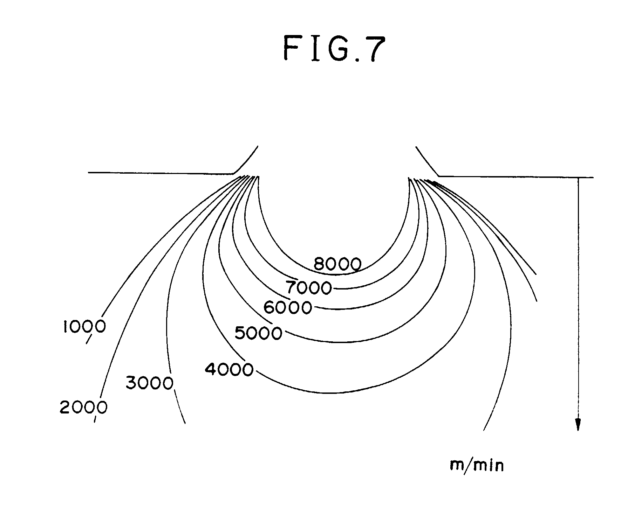

A dispersing device having such a shape as to be represented by the space w between the side plates, the space t between the dispersing plates, and the sectional area S of the dispersing pipe as shown in Fig. 6 (i.e., the dispersing device as shown in Figs. 1 and 2) was mounted in the nonwoven fabric producing apparatus as shown in Fig. 5. Then, the evaluation was carried out. The air velocity distribution is shown in Fig. 7, and the results of the evaluation are shown in Table 1.

(Example 2)

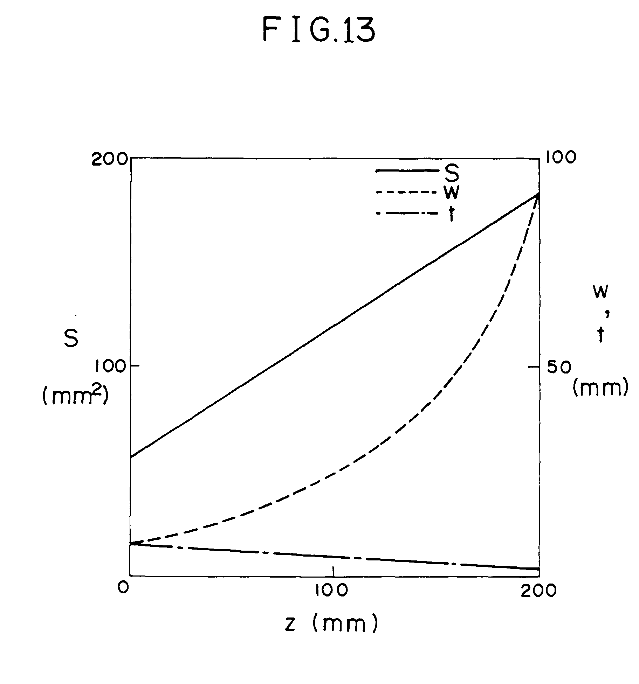

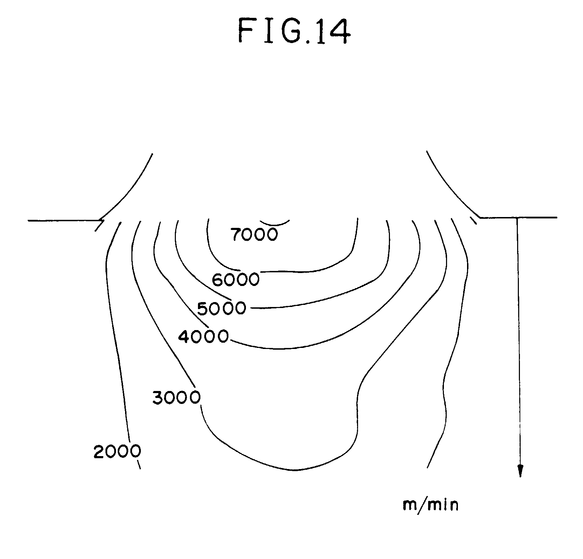

A dispersing device having such a shape as to be represented by the space w between the side plates, the space t between the dispersing plates, and the sectional area S of the dispersing pipe as shown in Fig. 13 was mounted in the nonwoven fabric producing apparatus as shown in Fig. 5. The air velocity distribution is shown in Fig. 14, and the results of the evaluation are shown in Table 1.

(Comparison 1)

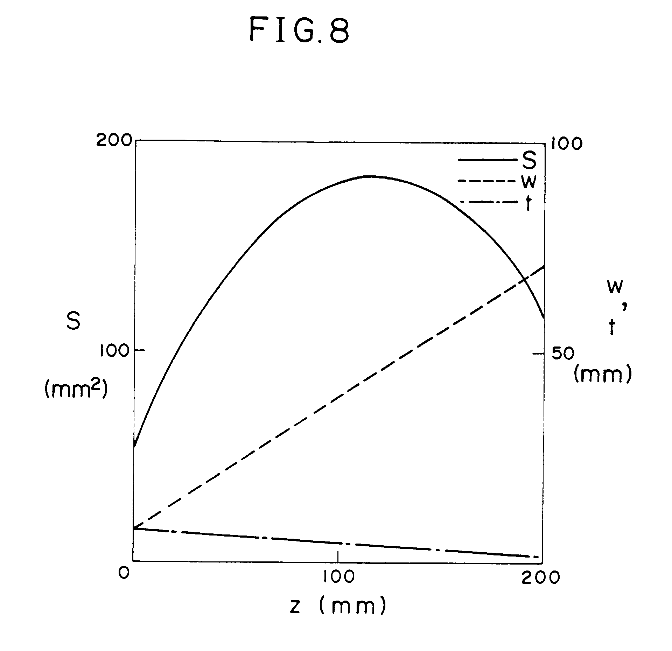

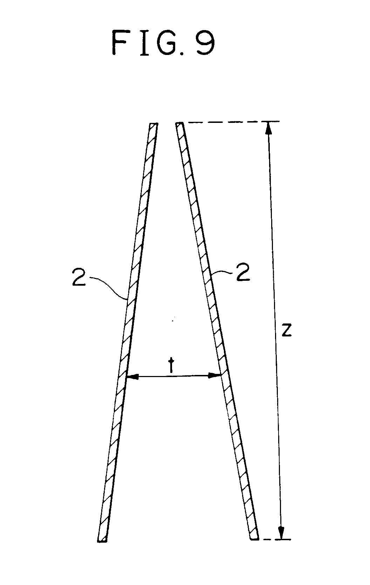

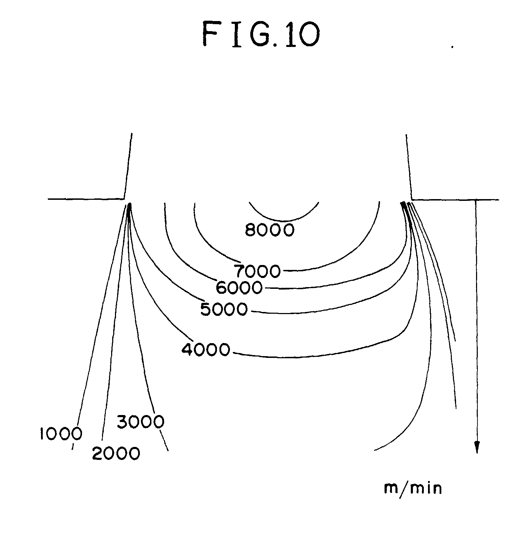

A dispersing device having such a shape as to be represented by the space w between the side plates, the space t between the dispersing plates, and the sectional area S of the dispersing pipe as shown in Fig. 8 (i.e., the dispersing device as shown in Figs. 9 and 2) was mounted in the nonwoven fabric producing apparatus as shown in Fig. 5. Then, the evaluation was carried out. The air velocity distribution is shown in Fig. 10, and the results of the evaluation are shown in Table 1.

(Comparison 2)

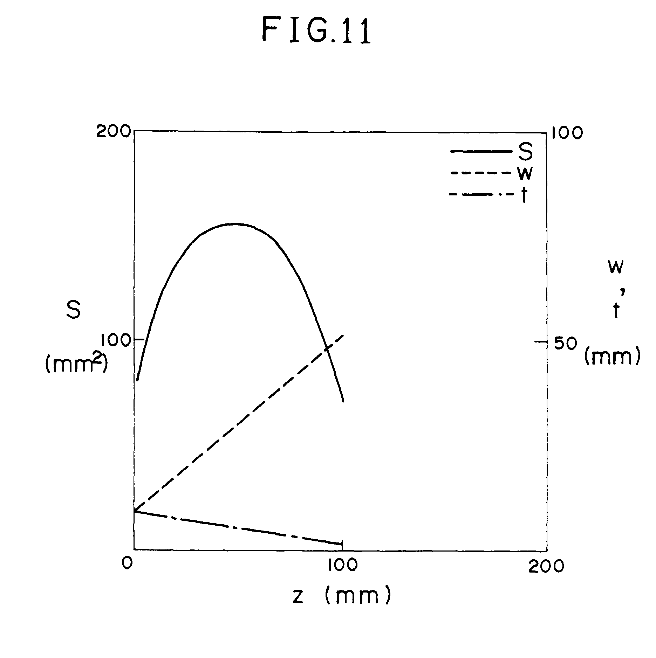

A dispersing device having such a shape as to be represented by the space w between the side plates, the space t between the dispersing plates, and the sectional area S of the dispersing pipe as shown in Fig. 11 was mounted in the nonwoven fabric producing apparatus as shown in Fig. 5. The results of the evaluation are shown in Table 1.

In Comparison 2, turbulence of the air flow at the filaments outlet was remarkable, so that the air velocity distribution could not be measured.

(Comparison 3)

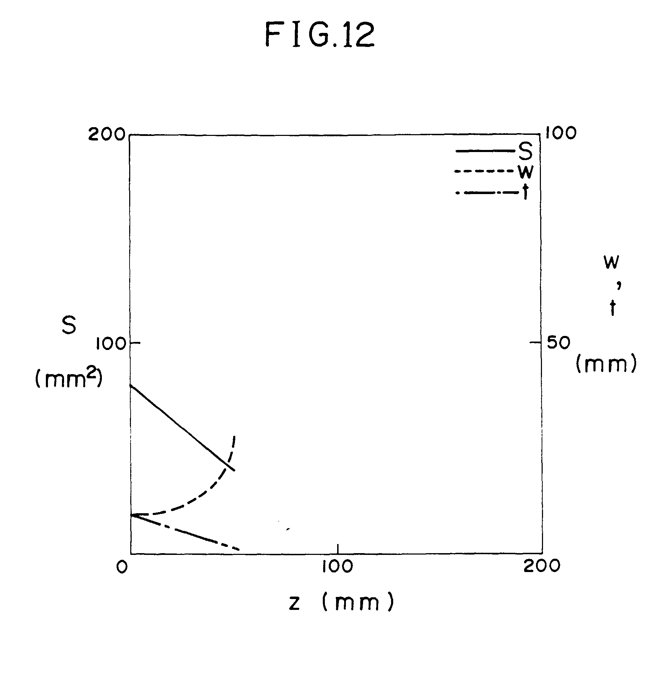

A dispersing device having such a shape as to be represented by the space w between the side plates, the space t between the dispersing plates, and the sectional area S of the dispersing pipe as shown in Fig. 12 was mounted in the nonwoven fabric producing apparatus as shown in Fig. 5. The results of the evaluation are shown in Table 1.

In Comparison 3, the ejected air velocity was beyond a measurable range, so that the air velocity distribution could not be measured. However, it was confirmed that the air velocity along the side plates was remarkably high.

|  | S (Send) (mm$^2$) | Va (m/min) | $d^2w/dz^2$ (max) | Dispersion Width (mm) | Web Appearance | Va/Vf |
|---|---|---|---|---|---|---|
| Example 1 | S=-0.11z+81.0 (70) | 10000 | 0.29 | 240 | ◎ | 3.3 |
| Example 2 | S=0.64z+56.25 (183) | 3800 | 0.04 | 100 | ○ | 1.3 |
| Comparison 1 | S= (0.32z+7.50) × (-0.03z+7.50) (120) | 5800 | - | 90 | × | 1.9 |
| Comparison 2 | S=(-0.08z+9.00) × (0.43z+9.00) (72) | 9700 | - | 75 | × | 3.2 |
| Comparison 3 | S=-0.82z+81.0 (40) | 17500 | 0.57 | 220 | × | 5.8 |

The criterion of the evaluation of the web appearance in Table 1 is as follows:

◎ very good (uniform and wide dispersion condition with no yarn bundles)
○: good (almost uniform and wide dispersion condition with almost no yarn bundles)
✕ = bad (uniform and narrow dispersion condition with many yarn bundles)

Industrial Applicability

According to the dispersing device of the present invention, a change in sectional area is small. Therefore, the turbulence of the carrier air flow is reduced to thereby uniformly and widely disperse the filaments on the moving collector surface. Accordingly, a web having a good appearance with less nonuniformity and less yarn bundles as compared with the prior art dispersing device can be obtained. Thus, the dispersing device of the present invention is suitable for the production of a nonwoven fabric.

**Claims**

1.   A filaments dispersing device for the production of a nonwoven fabric, for dispersing filaments (A) carried by an air flow and ejecting said filaments (A) onto a moving collector surface (14), said filaments dispersing device being formed as a vertically extending dispersing pipe (1) having an upper end formed with a filaments inlet and a lower end formed with a filaments outlet (5) wherein the distance t between the pipe walls in a first direction in a vertical plane is decreased with an increase in distance z from said filaments inlet toward said filaments outlet and the distance w between the pipe walls in a second direction in a vertical plane perpendicular to said first direction is increased with the increase in said distance z, said distance w at said filaments outlet being greater than said distance t at said filaments outlet characterised in that a sectional area S of said dispersing pipe at an arbitrary portion thereof in a horizontal plane perpendicular to a line along said distance z is represented by an expression approximated to Expression 1 to be given below, and $dw/dz \geq 0$ and $d^2w/dz^2 \leq 0.3$ are satisfied for all values of said distance z.

$$\text{Expression 1:} \qquad S = a \times z + b$$

where a is a constant satisfying $-1.00 \leq a \leq 1.00$, and b is a sectional area of said filaments inlet.

2.   A filaments dispersing device according to claim 1 said dispersing pipe (1) comprising a pair of dispersing plates (2) extending generally vertically so as to be opposed to each other and a pair of side plates (3) connecting said dispersing plates, said distance t being the distance between said dispersing plates (2) and said distance w being the distance between said side plates (3).

3.   A filaments dispersing device according to claim 1 or claim 2 wherein w = t at said filaments inlet.

4.   A filaments dispersing device according to any preceding claim wherein said filaments inlet is a square or a circle in cross section in a horizontal plane.

5.   A filaments dispensing device according to any preceding claim wherein the filaments outlet is rectangular or elliptical in cross section in a horizontal plane.

6.   A filaments dispersing device according to any preceding claim wherein said constant a is zero in Expression 1.

7.   A filaments dispersing device according to any preceding claim wherein the dimensions of the pipe are chosen such that a condition for carrying said filaments (A) is such that an air velocity Va at said filaments outlet (5) is represented by a ratio of Q/Send where Q represents a flow rate of said air flow and Send represents a sectional area of said filaments outlet, and that said air velocity Va is related with a filaments velocity Vf so as to satisfy 2Vf < Va < 4Vf.

8.   A nonwoven fabric producing apparatus comprising a filaments dispersing device (1) according to any one of claims 1 to 7; means (11, 12, 13) for providing filaments (A) carried by an airflow to said filaments dispersing device (1); and a moving collector surface (14) for receiving filaments (A) dispersed by said filaments dispersing device (1).

9. A method of making a nonwoven fabric comprising providing filaments (A) carried by an airflow to a filaments dispersing device (1) according to any one of claims 1-7 said filaments dispersing device (1) dispersing said filaments (A) onto a moving collector surface (14).

**Patentansprüche**

1. Filamentdispergiervorrichtung zur Herstellung eines Vliesstoffs, zum Verteilen von Filamenten (A), die von einem Luftstrom getragen werden, und Ausstoßen der Filamente (A) auf eine sich fortbewegende Sammelfläche (14), wobei die Filamentdispergiervorrichtung gebildet ist durch ein sich vertikal erstreckendes Dispergierrohr (1) mit einem oberen Ende mit einem Filamenteinlaß und einem unteren Ende mit einem Filamentauslaß (5), wobei der Abstand t zwischen den Rohrwänden in einer ersten Richtung in einer vertikalen Ebene mit zunehmendem Abstand z von dem Filamenteinlaß zum Filamentauslaß hin abnimmt und der Abstand w zwischen den Rohrwänden in einer zweiten Richtung in einer vertikalen Ebene senkrecht zu der ersten Richtung mit zunehmendem Abstand z zunimmt, wobei der Abstand w an dem Filamentauslaß größer ist als der Abstand t am Filamentauslaß, dadurch gekennzeichnet, daß ein Querschnitt S des Dispergierrohrs an einer beliebigen Stelle desselben in einer horizontalen Ebene senkrecht zu einer Linie entlang dem Abstand z wiedergegeben ist durch einen Ausdruck, der dem unten angegebenen Ausdruck 1 angenähert ist, und $dw/dz \geq 0$ ist und $d^2w/dz^2 \leq 0,3$ ist für alle Werte des Abstands z.

$$\text{Ausdruck 1:} \qquad S = a \times z + b,$$

wobei a eine Konstante ist, die $-1,00 \leq a \leq 1,00$ genügt, und b der Querschnitt des Filamenteinlasses ist.

2. Filamentdispergiervorrichtung nach Anspruch 1, wobei das Dispergierrohr (1) ein Paar von Dispergierplatten (2), die sich im wesentlichen vertikal erstrecken, so daß sie einander gegenüberliegen, und ein Paar die Dispergierplatten verbindende Seitenplatten (3) umfaßt, wobei der Abstand t der Abstand zwischen den Dispergierplatten (2) und der Abstand w der Abstand zwischen den Seitenplatten (3) ist.

3. Filamentdispergiervorrichtung nach Anspruch 1 oder 2, wobei an dem Filamenteinlaß w = t ist.

4. Filamentdispergiervorrichtung nach einem der vorhergehenden Ansprüche, wobei der Filamenteinlaß in einer horizontalen Ebene einen quadratischen oder kreisförmigen Querschnitt aufweist.

5. Filamentdispergiervorrichtung nach einem der vorhergehenden Ansprüche, wobei der Filamentauslaß in einer horizontalen Ebene einen echteckigen oder elliptischen Querschnitt aufweist.

6. Filamentdispergiervorrichtung nach einem der vorhergehenden Ansprüche, wobei die Konstante a im Ausdruck 1 Null ist.

7. Filamentdispergiervorrichtung nach einem der vorhergehenden Ansprüche, wobei die Abmessungen des Rohrs derart gewählt sind, daß die Bedingung zum Tragen der Filamente (A) so ist, daß eine Luftgeschwindigkeit Va an dem Filamentauslaß (5) wiedergegeben wird durch ein Verhältnis Q/Send, bei dem Q die Strömungsgeschwindigkeit des Luftstroms ist und Send der Querschnitt des Filamentauslasses ist, und daß die Luftgeschwindigkeit Va mit einer Filamentgeschwindigkeit Vf so zusammenhängt, daß 2Vf < Va < 4Vf erfüllt ist.

8. Vorrichtung zur Herstellung von Vliesstoffen, umfassend eine Filamentdispergiervorrichtung (1) nach einem der Ansprüche 1 bis 7, Mittel (11, 12, 13), um durch einen Luftstrom getragene Filamente (A) der Filamentdispergiervorrichtung (1) zuzuführen, und eine sich fortbewegende Sammelfläche (14) zur Aufnahme von Filamenten (A), die durch die Filamentdispergiervorrichtung (1) verteilt worden sind.

9. Verfahren zur Herstellung eines Vliesstoffs, umfassend das Zuführen von Filamenten (A), die von einem Luftstrom getragen werden, zu einer Filamentdispergiervorrichtung (1) nach einem der Ansprüche 1 bis 7, wobei die Filamentdispergiervorrichtung (1) die Filamente (A) auf eine sich fortbewegende Sammelfläche (14) verteilt.

**Revendications**

1. Dispositif de dispersion de filaments pour la production d'un tissu non-tissé, destiné à disperser des filaments (A) transportés par un flux d'air et à éjecter lesdits filaments (A) sur une surface collectrice (14) en mouvement, ledit dispositif de dispersion de filaments se présentant sous la forme d'un tube de dispersion (1) s'étendant verticalement et comportant une extrémité supérieure comportant une entrée de filaments et une extrémité inférieure comportant une sortie (5) de filaments, la distance t entre les parois du tube dans une première direction dans un plan vertical diminuant à mesure qu'augmente la distance z depuis ladite entrée de filaments vers ladite sortie de filaments, et la distance w entre les parois du tube dans une deuxième direction dans un plan vertical perpendiculaire à ladite première direction augmente à mesure qu'augmente ladite distance z, ladite distance w à ladite sortie de filaments étant plus grande que ladite distance t à ladite sortie de filaments, caractérisé en ce que la superficie s de section dudit tube de dispersion dans une partie quelconque de ce dernier dans un plan horizontal perpendiculaire à une ligne le long de ladite distance z est représentée par une expression se rapprochant de l'Expression 1 donnée ci dessous, et $dw/dz \geq 0$ et $d^2w/dz^2 \leq 0,3$ sont satisfaites pour toutes valeurs de ladite distance z

$$\text{Expression 1:} \qquad S = a \times z + b$$

où a est une constante satisfaisant à l'inégalité $-1,00 \leq a \leq 1,00$, et b est la superficie de section transversale de ladite entrée de filaments.

2. Dispositif de dispersion de filaments selon la revendication 1, ledit tube de dispersion (1) comprenant une paire de plaques de dispersion (2) s'étendant d'une façon générale verticalement de manière à se trouver en regard l'une de l'autre et une paire de plaques latérales (3) reliant lesdites plaques de dispersion, ladite distance t étant la distance entre lesdites plaques de dispersion (2) et ladite distance w étant la distance entre lesdites plaques latérales (3).

3. Dispositif de dispersion de filaments selon la revendication 1 ou la revendication 2, dans lequel w = t à ladite entrée de filaments.

4. Dispositif de dispersion de filaments selon l'une quelconque des revendications précédentes, dans lequel ladite entrée de filaments a une section transversale carrée ou circulaire dans un plan horizontal.

5. Dispositif de dispersion de filaments selon l'une quelconque des revendications précédentes, dans lequel la sortie de filaments a une section transversale rectangulaire ou elliptique dans un plan horizontal.

6. Dispositif de dispersion de filaments selon l'une quelconque des revendication précédentes, dans lequel ladite constante a est nulle dans l'expression A.

7. Dispositif de dispersion de filaments selon l'une quelconque des revendications précédentes, dans lequel les dimensions du tube sont choisies de telle sorte que la condition pour que lesdits filaments (A) soient transportés est telle que la vitesse Va de l'air à ladite sortie (5) de filaments est représentée par un rapport Q/Send dans lequel Q représente le débit dudit flux d'air et Send représente la superficie de section de ladite sortie de filaments, et que ladite vitesse Va de l'air est liée à la vitesse Vf des filaments de manière à satisfaire l'inégalité 2Vf < Va < 4Vf.

8. Appareil de production de tissu non-tissé comprenant un dispositif (1) de dispersion de filaments selon l'une quelconque des revendications 1 à 7; un moyen (11, 12, 13) servant à fournir audit dispositif (1) de dispersion de filaments des filaments (A) transportés par un flux d'air ; et une surface collectrice (14) en mouvement destinée à recevoir des filaments (A) dispersés par ledit dispositif (1) de dispersion de filaments.

9. Procédé de fabrication d'un tissu non-tissé comprenant les étapes consistant à fournir de filaments (A) transportés par un flux d'air à un dispositif (1) de dispersion de filaments selon l'une quelconque des revendications 1-7, ledit dispositif (1) de dispersion de filaments dispersant lesdits filaments (A) sur une surface collectrice (14) en mouvement.

# FIG.1

# FIG.2

# FIG.3

S — □ —4a

S —4b

|← w →|

S —4c ↕ t

S

# FIG.4

S ○ —6a

S —6b

6c

S

FIG.5

# F I G. 6

# FIG.7

m/min

# FIG.8

# FIG. 9

# FIG.10

8000

7000
6000
5000

4000

1000     3000
    2000

m/min

# FIG.11

EP 0 538 480 B1

FIG.12

18

# F I G.13

# FIG.14

7000

6000

5000

4000

3000

2000

m/min